Europäisches Patentamt

European Patent Office

Office européen des brevets

(11) Publication number: **0 361 920**
**A2**

## EUROPEAN PATENT APPLICATION

(21) Application number: **89309888.9**

(51) Int. Cl.5: **G11B 7/08 , G11B 7/09**

(22) Date of filing: **28.09.89**

(30) Priority: **28.09.88 JP 243564/88**

(43) Date of publication of application:
**04.04.90 Bulletin 90/14**

(84) Designated Contracting States:
**DE FR GB**

(71) Applicant: **KABUSHIKI KAISHA TOSHIBA**
**72, Horikawa-Cho Saiwai-ku**
**Kawasaki-shi Kanagawa-ken(JP)**

(72) Inventor: **Hayashi, Yasuhiro**
**c/o Intellectual Property Div. Toshiba**
**Corporation**
**1-1-1, Shibaura Minato-ku Tokyo(JP)**

(74) Representative: **Muir, Ian R. et al**
**HASELTINE LAKE & CO. Hazlitt House 28**
**Southampton Buildings Chancery Lane**
**London WC2A 1AT(GB)**

(54) **Pickup control circuit for optical disc reproducing apparatus.**

(57) Apparatus for controlling the operation of a data pickup (100) in an apparatus for reproducing data from a data storage medium. The apparatus includes an actuator (200), responsive to an input signal, for positioning the data pickup (100) with respect to an information track of the data storage medium, a first generator (300) for generating an error signal representing the degree to which the data pickup (100) is displaced from a proper position with respect to the information track, the error signal including a data signal and an offset signal, a combining circuit (400) for combining an offset compensation signal and the error signal to produce a corrected error signal, a supplying circuit (500) for supplying the corrected error signal to the actuator (200) as the actuator means input signal and a second generator (600) for automatically generating the offset compensation signal from the error signal.

FIG. 2.

# PICKUP CONTROL CIRCUIT FOR OPTICAL DISC REPRODUCING APPARATUS

The present invention relates generally to an optical disc reproducing apparatus, and more particularly, to a pickup control circuit for an optical disc reproducing apparatus.

An optical disc reproducing apparatus is provided with a pickup control circuit such as a tracking control circuit or a focus control circuit. The tracking control circuit controls an optical pickup, e.g., a laser pickup, so that a light beam of the optical pickup accurately traces a recorded information track. The focus control circuit controls the optical pickup, so that the light beam of the optical pickup is accurately focused on the optical information track. Typically the tracking or focus control circuit is constituted in a servo loop circuit including the optical pickup.

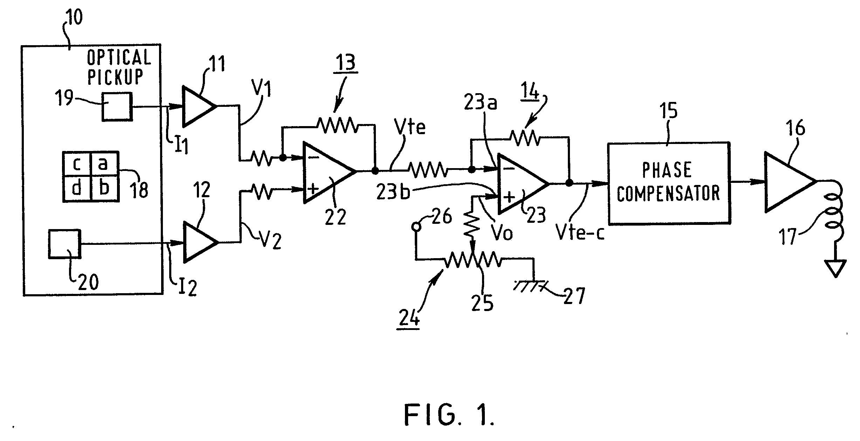

FIGURE 1 is a circuit diagram showing a pickup control circuit known to the applicant, e.g., a tracking control circuit for an optical reproducing apparatus. In FIGURE 1, the tracking control circuit is provided with an optical pickup 10, a pair of current to voltage converters (referred as to current-voltage converter hereafter) 11 and 12, a tracking error signal generator 13, a tracking offset adjusting circuit 14, a phase compensator 15, a power amplifier 16 and a tracking actuator 17.

The optical pickup 10 includes a main-beam detector 18, a pair of sub-beam detectors 19 and 20, a light source (not shown), a beam splitter (not shown), an objective lens (not shown), the tracking actuator 17 and a focusing actuator (not shown). The optical pickup 10 is operative between an active condition in which information recorded on an optical disc is reproduced by the optical pickup 10 and a suspended condition in which information is not reproduced. In the suspended condition, no light from the light source reaches detectors 18, 19 or 20. Usually, the optical pickup 10 is moved between active and suspended positions respectively corresponding to the active and suspended conditions.

The light source generates three light beams, i.e., a main-beam and two sub-beams. The light beams are applied to the objective lens through the beam splitter. The objective lens converges the light beams on the optical disc so that the light beams are reflected by the optical disc. When the optical pickup 10 is properly controlled by a servo control according to the tracking control circuit, the main-beam is exactly aimed at the information track of the optical disc. At that time, the sub-beams are exactly aimed at different edges of the information track.

The optical disc reflects the light beams. The reflected light beams are applied to the beam splitter through the objective lens. The beam splitter applies the reflected light beams to the detectors. When the optical pickup 10 is properly controlled by the servo control according to the tracking control circuit, the reflected main-beam exactly falls on the main-beam detector 18. At that time, the reflected sub-beams fall exactly on the sub-beam detectors 19 and 20. The tracking actuator 17 controls the movement of the objective lens in the direction across the information track so that the reflected light beams fall exactly on their corresponding detectors 18, 19 and 20. The focusing actuator does not take part in the tracking control operation as described below, but is provided for controlling the movement of the objective lens in the direction vertical to the information track so that the reflected light beams are exactly focused on the information track.

The main-beam detector 18 includes four photocells 18a, 18b, 18c and 18d, as shown in FIGURE 1. However, the main-beam detector 18 does not take part in the tracking control operation. Thus, the detailed construction of the main-beam detector 18 will not be described. The first and second photocells 18a and 18b of the main-beam detector 18 and one of the sub-beam detectors, e.g., the sub-beam detector 19, are positioned in a first line along the direction of the information track. The third and fourth photocells 18c and 18d of the main-beam detector 18 and the other sub-beam detector 20 are positioned in a second line along the direction of the information track. The sub-beam detectors 19 and 20 each are constituted by single photocell.

In the tracking control circuit, the sub-beam detectors 19 and 20 detect their corresponding sub-beams. Thus, first and second photo detection currents I1 and I2 are generated in the sub-beam detectors 19 and 20. The first and second photo detection currents I1 and I2 are respectively applied to the current/voltage converters 11 and 12 so that the currents I1 and I2 are converted into first and second voltage signals V1 and V2, respectively. The first and second voltage signals V1 and V2 are applied to the tracking error signal generator 13.

The tracking error signal generator 13 comprises a first subtractor 22. Two input terminals of the first subtractor 22 are respectively connected to the current/voltage converters 11 and 12 through resistors. The first subtractor 22 subtracts the first and second voltage signals V1 and V2. Thus, the difference of the first and second voltage signals V1 and V2 is obtained by the first subtractor 22. The difference is output from the tracking error signal generator 13 as a tracking error signal Vte.

The first and second photo detection currents I1 and I2 (respectively corresponding to the first and second voltage signals V1 and V2) vary in opposite direction to each other when the pickup 10 is displaced from the center of the information track. Thus, the tracking error signal Vte varies in response to the displacement of the pickup 10 away from its proper position. The polarity of the tracking error signal Vte changes according to the direction of the optical pickup 10 outward or inward the optical disc. The tracking error signal Vte output from the tracking error signal generator 13 is applied to the tracking offset adjusting circuit 14.

The tracking offset adjusting circuit 14 comprises a second subtractor 23 and a compensation voltage generator 24. A first input terminal 23a of the second subtractor 23 is connected to the output terminal of the tracking error signal generator 13. A second input terminal 23b of the second subtractor 23 is connected to the compensation voltage generator 24. The compensation voltage generator 24 includes a variable resistor 25. The variable resistor 25 is connected between a DC voltage source 26 and a ground terminal 27. The output terminal of the variable resistor 25 is connected to the second input terminal of the second subtractor 23.

The tracking error signal Vte is applied to the first input terminal 23a of the second subtractor 23. The second input terminal 23b of the second subtractor 23 is connected to the compensation voltage generator 24. The compensation voltage generator 24 generates an offset compensation voltage Vo which is adjustable by the variable resistor 25. The offset compensation voltage Vo is applied to the second input terminal 23b of the second subtractor 23. Thus, the second subtractor 23 subtracts the offset compensation voltage Vo from the tracking error signal Vte.

As is well known, the tracking error signal Vte is generally apt to include a DC tracking offset voltage Vtos. The tracking offset voltage Vtos occurs due to an irregularity of circuit elements constituting the tracking control circuit. The tracking offset voltage Vtos causes the optical pickup 10 to trace the information track at an off-center position. Thus, the operation of the optical pickup 10 becomes unstable, or an output of the optical pickup 10 is adversely affected.

The tracking offset voltage Vtos may be removed by operating the tracking offset adjusting circuit 14. In the manufacturing process, such an operation for removing the tracking offset voltage Vtos is carried out by adjusting the variable resistor 25. When the offset compensation voltage Vo matches with the tracking offset voltage Vtos, the tracking error signal Vte is removed the tracking offset voltage Vtos. Thus, a corrected tracking error signal Vte-c is output from the tracking offset adjusting circuit 14.

The corrected tracking error signal Vte-c is applied to the power amplifier 16 through the phase compensation circuit 15. The phase compensation circuit 15 compensates the phase of the corrected tracking error signal Vte-c. The power amplifier 16 drives the tracking actuator 17 according to corrected tracking error signal Vte-c. The tracking actuator 17 moves the optical pickup 10 or the objective lens in the optical pickup 10 in the direction perpendicular to the information track.

The power amplifier 16, the tracking actuator 17, the optical pickup 10 and the tracking error signal generator 13 constitute a tracking servo loop. In the tracking servo loop, the optical pickup 10 or the objective lens moves to reduce the corrected tracking error signal Vte-c to zero. As a result, the optical pickup 10 at the off-center position of the information track moves to the center position of the information track according to the servo control of the servo loop.

The conventional pickup control circuit of the optical disc reproducing apparatus as described, however, has following drawbacks. That is, the operation for removing the tracking offset voltage Vtos is carried manually out by an operator in the manufacturing process, as described above. For example, the operator adjusts the offset compensation voltage Vo by watching carefully the waveform of the tracking error signal Vte-c and/or Vte on a display device such as an oscilloscope. Such manual operation increases the cost and time for manufacturing the optical disc reproducing apparatus.

Further, the tracking offset adjusting circuit 14 is fixed at the conclusion of manufacturing of the optical disc reproducing apparatus. However, the tracking offset voltage Vtos can reoccur in the normal use of the apparatus due to many factors, e.g., a temperature change, a change with the passage of time, etc. The tracking offset voltage Vtos reoccurring in the normal use of the apparatus is very difficult to remove for general users.

As described in the above, the conventional pickup control circuit of the optical disc reproducing apparatus has significant problems in both the manufacturing process and in normal use.

The present invention therefore seeks to provide a pickup control circuit for an optical disc reproducing apparatus which is easy to manufacture.

The present invention also seeks to provide a pickup control circuit for an optical disc reproducing apparatus in which an offset voltage of a pickup control signal is automatically removed.

A pickup control circuit for an optical disc reproducing apparatus according to one aspect of the present invention includes an actuator responsive to an input signal, for positioning the pickup with respect to an information track of the data storage medium, a first signal generator for generating an error signal representing the degree to which the pickup is displaced from a proper position with respect to the information track, the error signal including a data signal and an offset signal, a signal combiner for combining an offset compensation signal and the error signal to produce a corrected error signal, a signal supplyer for supplying the corrected error signal to the actuator means as the actuator input signal and second signal generator for automatically generating the offset compensation signal from the error signal.

For a better understanding of the present invention and many of the attendant advantages thereof reference will now be made by way of example to the accompanying drawings, wherein:

FIGURE 1 is a block diagram showing the conventional pickup control circuit for an optical disc reproducing apparatus;

FIGURE 2 is a block diagram showing a pickup control circuit for an optical disc reproducing apparatus, which constitute a basic construction of the present invention;

FIGURE 3 is a block diagram showing a pickup control circuit for an optical disc reproducing apparatus, which constitutes a first embodiment of the present invention;

FIGURES 4(A), 4(B), and 4(C) are waveform diagrams for explaining the operation of the pickup control circuit of FIGURE 4;

FIGURE 5 is a block diagram showing a pickup control circuit for an optical disc reproducing apparatus, which constitutes a second embodiment of the present invention;

FIGURE 6 is a block diagram showing a pickup control circuit for an optical disc reproducing apparatus, which constitutes a third embodiment of the present invention; and

FIGURE 7 is a block diagram showing a pickup control circuit for an optical disc reproducing apparatus, which constitute a fourth embodiment of the present invention.

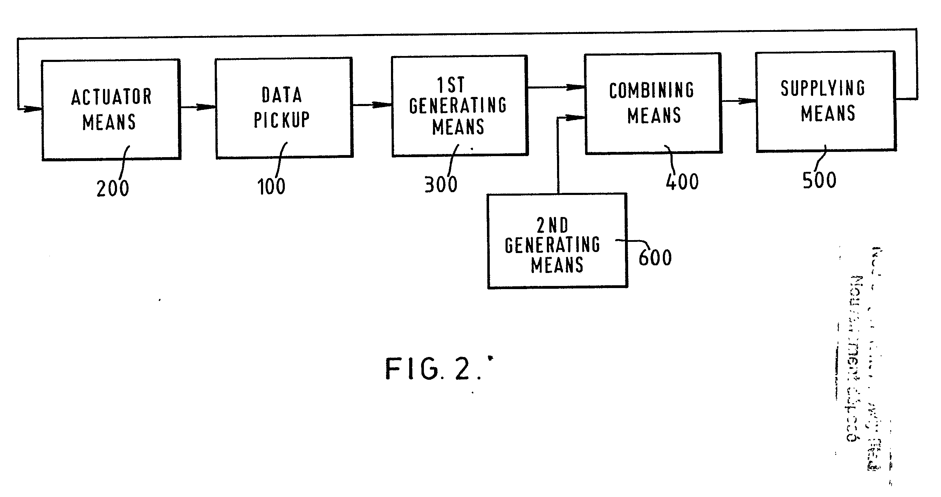

The present invention will be described in detail with reference to the FIGURES 2 through 7. Throughout the drawings, reference numerals or letters used in FIGURE 1 will be used to designate like or equivalent elements for simplicity of explanation.

Referring now to FIGURE 2, an apparatus for controlling the operation of a data pickup in the apparatus for reproducing data from a data storage medium, which constitutes a basic construction of the present invention, will be described. In FIGURE 2, the apparatus has a data pickup 100, actuator means 200, first generating means 300, combining means 400, supplying means 500 and second generating means 600. The actuator means 200 is coupled to the data pickup 100 for positioning the data pickup 100 with respect to an information track of the data storage medium.

The first generating means 300 is coupled to the data pickup 100 for generating an error signal representing the degree to which the data pickup 100 is displaced from a proper position with respect to the information track. The error signal includes a data signal and an offset signal. The combining means 400 combines an offset compensation signal and the error signal to produce a corrected error signal. The supplying means 500 supplies the corrected error signal to the actuator means 200 as the actuator means input signal. The second generating means 600 automatically generates the offset compensation signal from the error signal when the data pickup 100 is in a suspended condition.

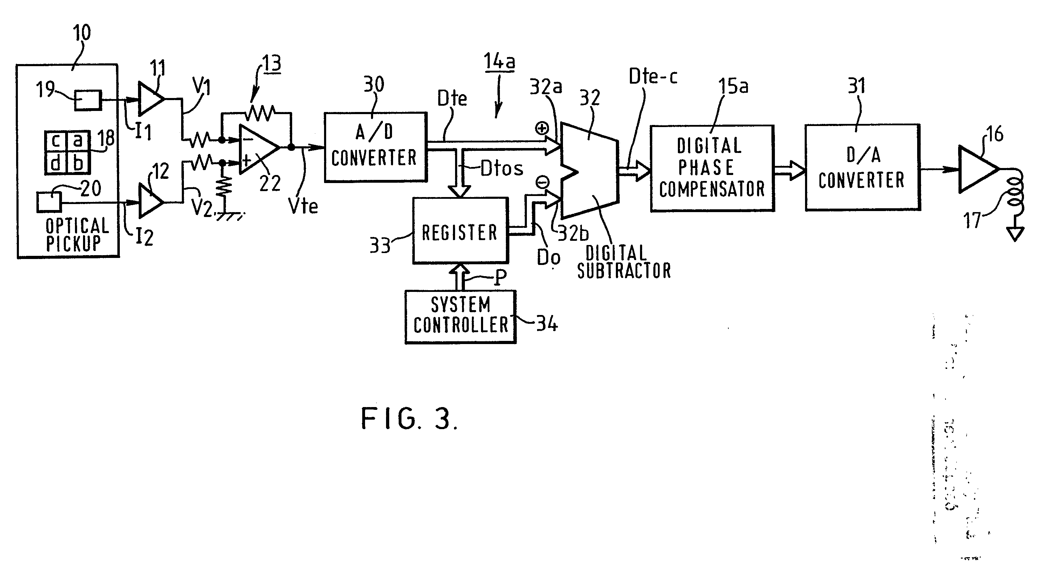

Referring now to FIGURE 3, a pickup control circuit of an optical disc reproducing apparatus which constitutes a first embodiment of the present invention will be described in detail. The pickup control circuit is applied for controlling the tracking operation of an optical pickup. That is, the pickup control circuit of FIGURE 3 constitutes a tracking control circuit for the optical pickup.

In FIGURE 3, the tracking control circuit is provided with an optical pickup 10, a pair of current/voltage converters 11 and 12, a tracking error signal generator 13, an analog to digital converter (referred to as an A/D converter hereafter) 30, a tracking offset compensation circuit 14a, a digital phase compensator 15a, a digital to analog converter (referred to as a D/A converter hereafter) 31, a power amplifier 16 and a tracking actuator 17.

The optical pickup 10 includes a main-beam detector 18, a pair of sub-beam detectors 19 and 20, a light source (not shown), a beam splitter (not shown), an objective lens (not shown), the tracking actuator 17 and a focusing actuator (not shown). The tracking actuator 17 constitutes actuator means responsive to an input signal for positioning the optical pickup 10 on an information track of the optical disc. The light source generates three light beams, i.e., a main-beam and two sub-beams, similar to the optical pickup 10 of FIGURE 1. The light beams are applied to the objective lens through the beam splitter. The objective lens converges the light beams on the optical disc so that the light beams are reflected by the optical disc. When the optical pickup 10 is properly controlled by a servo control according to the tracking control circuit, the main-beam is exactly aimed at an information track of the optical disc. At that time, the sub-beams are exactly aimed at the different edges of the information track.

The optical disc reflects the light beams. The reflected light beams are applied to the beam splitter through the objective lens. The beam splitter applies the reflected light beams to the detectors. When the optical pickup 10 is properly controlled by the servo control according to the tracking control circuit, the reflected main-beam exactly falls on the main-beam detector 18. At that time, the reflected sub-beams exactly fall on the sub-beam detectors 19 and 20. The tracking actuator 17 controls the movement of the objective lens in the direction across the information track so that the reflected light beams exactly fall on their corresponding detectors 18, 19 and 20.

The focusing actuator does not take part in the tracking control operation as described below, but is provided for controlling the movement of the objective lens in the direction vertical to the information track so that the reflected light beams are exactly focused on the information track.

The main-beam detector 18 includes four photocells 18a, 18b, 18c and 18d, as shown in FIGURE 3. But the main-beam detector 18 does not take part in the tracking control operation. Thus, the detailed construction of the main-beam detector 18 will not be described. The first and second photocells 18a and 18b of the main-beam detector 18 and one of the sub-beam detectors, e.g., the sub-beam detector 19, are positioned in a first line along the direction of the information track. The third and fourth photocells 18c and 18d of the main-beam detector 18 and the other sub-beam detector 20 are positioned in a second line along the direction of the information track. The sub-beam detectors 19 and 20 each are also constituted by single photocell.

In the tracking control circuit, the sub-beam detectors 19 and 20 detect their corresponding sub-beams. Thus, first and second photo detection currents I1 and I2 are generated in the sub-beam detectors 19 and 20. The first and second photo detection currents I1 and I2 are applied to the current-voltage converters 11 and 12 so that the currents I1 and I2 are converted into first and second voltage signals V1 and V2, respectively. The first and second voltage signals V1 and V2 are applied to the tracking error signal generator 13.

The invention thus includes the data pickup for reproducing data from a data storage medium. As embodied herein, the data pickup comprises the optical pickup 10.

The tracking error signal generator 13 comprises an analog subtractor 22. Two input terminals of the analog subtractor 22 are connected to the current/voltage converters 11 and 12 through resistors, respectively. The analog subtractor 22 subtracts the first and second voltage signals V1 and V2. Thus, the difference of the first and second voltage signals V1 and V2 is obtained by the analog subtractor 22. The difference is output from the tracking error signal generator 13 as a tracking error signal Vte.

The first and second photo detection currents I1 and I2 (corresponding to the first and second voltage signals V1 and V2) vary in opposite direction to each other when the pickup 10 is displaced from the center of the information track. Thus, the tracking error signal Vte varies in response to the displacement of the pickup 10. The polarity of the tracking error signal Vte changes according to the direction of the optical pickup 10 outward or inward with respect to the optical disc.

The tracking error signal Vte output from the tracking error signal generator 13 is applied to the A/D converter 30. The A/D converter 30 converts the tracking error signal Vte to a digital data Dte. The digital tracking error data Dte output from the A/D converter 30 is applied to the tracking offset compensation circuit 14a

The invention thus includes first generating means for generating an error signal representing the degree to which the pickup is displaced from a proper position with respect to the information track. Preferably, the invention thus includes first generating means for generating a tracking error signal representing the degree to which the pickup is displaced from a proper position with respect to the information track. As embodied herein, the first generating means comprises the tracking error signal generator 13.

The tracking offset compensation circuit 14a comprises a digital subtractor 32 and a register 33. A first input terminal 32a of the digital subtractor 32 is connected to the output terminal of the A/D converter 30 for receiving the digital tracking error data signal Dte. A second input terminal 32b of the digital subtractor 32 is connected to the output terminal of the register 33.

The invention thus includes combining means for combining an offset compensation signal and the error signal to produce a corrected error signal. Preferably, the invention thus includes combining means for combining a tracking offset compensation signal and the tracking error signal to produce a corrected tracking error signal. As embodied herein, the combining means comprises the digital subtractor 32.

The input terminal of the register 33 is connected to the output terminal of the A/D converter 30. The register 33 has a control terminal connected to a latch pulse source, e.g., a system controller 34. The system controller 34 is provided for controlling many operations of the optical disc reproducing apparatus and may be, for example, a microprocessor.

The invention thus includes second generating means for automatically generating the offset compensation signal from the error signal. Preferably, the invention thus includes storing means for storing the tracking error signal as the tracking offset compensation signal in response to the system control signal. As embodied herein, the second generating means or the storing means comprises the register 33.

The system controller 34 supplies the register 33 with a latch pulse P at a prescribed time. For example, the latch pulse P is output from the system controller 34 at a time in a period when the optical pickup 10 is in a suspended condition. There are many occasions when the optical pickup 10 is in a suspended condition; for example, during a disc loading mode, a disc search operation mode, a track jump operation mode, etc. The optical pickup 10 is also in a suspended condition just after that an operating power for the optical disc reproducing apparatus has been turned ON.

The register 33 latches the digital tracking error data signal Dte output from the A/D converter 30 in response to the latch pulse P. Thus, the register 33 latches a value of the digital tracking error data signal Dte at the time when the latch pulse P is applied to the register 33. The data latched in the register 33 is used as a digital offset compensation data signal Do, as described below. The digital offset compensation data signal Do latched in the register 33 is applied to the second input terminal 32b of the digital subtractor 32. Thus, the digital subtractor 32 subtracts the digital offset compensation data signal Do from the digital tracking error data signal Dte which is applied to the first input terminal 32a of the digital subtractor 32 from the A/D converter 30.

The tracking error signal Vte output from the tracking error signal generator 13 generally includes a DC tracking offset voltage Vtos, as described before in relation to the conventional tracking control circuit of FIGURE 1. The tracking offset voltage Vtos is applied to the A/D converter 30 as a part of the tracking error signal Vte. Thus, the digital tracking error data signal Dte includes a digital tracking offset voltage Dtos which corresponds to the tracking offset voltage Vtos.

The tracking offset voltage Vtos occurs due to an irregularity of circuit elements constituting the tracking control circuit, as described before. Thus, the tracking error signal Vte includes only the tracking offset voltage Vtos when the optical pickup 10 is in a suspended condition. Correspondingly, the digital tracking error data signal Dte includes only the digital tracking offset data signal Dtos at that time.

Now, the latch pulse P is applied to the register 33 at the prescribed time that the optical pickup 10 is in a suspended condition, as described above.

Thus, the register 33 latches the digital tracking error data signal Dte when the digital tracking error data signal Dte has the same data as digital tracking offset data signal Dtos. The data latched in the register 33 is output from the register 33 as the digital offset compensation data signal Do in the tracking operation of the optical pickup 10, as described above. In other words, the register 33 outputs the digital tracking offset data signal Dtos as the digital offset compensation data signal Do at that time.

The digital tracking error data signal Dte is subtracted by the digital offset compensation data signal Do which corresponds to the digital tracking offset data signal Dtos included in the digital tracking error data signal Dte. Thus, the component of the digital tracking error data signal Dte which consists of the digital tracking error data signal is automatically removed, thereby forming the corrected digital tracking error data signal Dte-c.

The corrected digital tracking error data signal Dte-c output from the tracking offset compensation circuit 14a is applied to D/A converter 31 through the digital phase compensator 15a. The digital phase compensation circuit 15s compensates the digital corrected tracking error signal Dte-c so that the phase of the corrected tracking error signal Vte-c is corrected. The D/A converter 31 converts the digital corrected tracking error signal Dte-c to an analog signal. Thus, a corrected tracking error signal Vte-c corresponding to the digital corrected tracking error signal Dte-c is output from the D/A converter 31. The corrected tracking error signal Vte-c is applied to the power amplifier 16.

The power amplifier 16 drives the tracking actuator 17 according to corrected tracking error signal Vte-c. The tracking actuator 17 moves the optical pickup 10 or the objective lens in the optical pickup 10 in the direction perpendicular to the information track. The power amplifier 16, the tracking actuator 17, the optical pickup 10 and the tracking error signal generator 13 constitute a tracking servo loop. In the tracking servo loop, the optical pickup 10 or the objective lens moves to reduce the corrected tracking error signal Vte-c to zero. As a result, the optical pickup 10 at the off-center position of the information track moves to the center position of the information track according to the servo control of the servo loop.

The invention thus includes supplying means for supplying the corrected error signal to the actuator means as the actuator means input signal. Preferrably, the invention thus includes supplying means for supplying the corrected tracking error signal to the actuator means as the actuator means input signal. As embodied herein, the supplying means comprises the power amplifier 16.

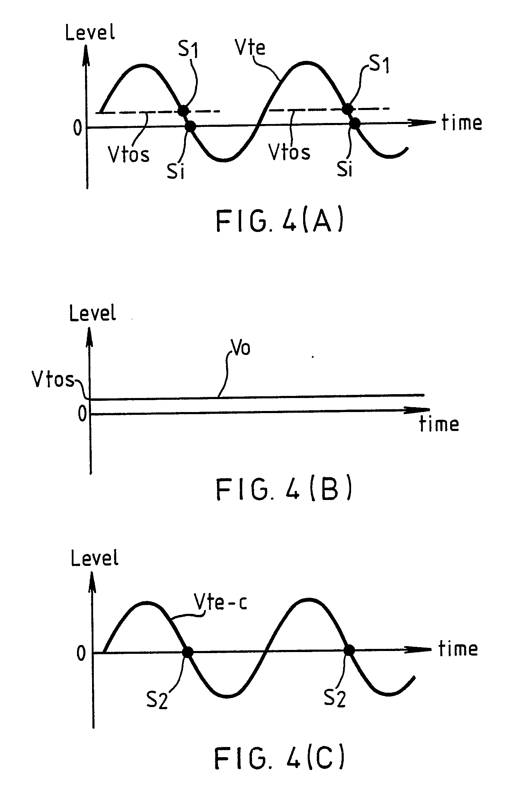

Now, an advantage of the tracking control circuit of FIGURE 3 will be described in reference to FIGURES 4(A), 4(B) and 4(C). FIGURE 4(A) shows the waveform of the tracking error signal Vte output from the tracking error signal generator 13. The waveform of the tracking error signal Vte is offset from the zero level axis of the graph coordinate by the tracking offset voltage Vtos. When the tracking error signal Vte having the offset waveform is used for the tracking control servo, a servo convergence point S1 at that time differs from an ideal servo convergence point Si on the zero level axis.

FIGURE 4(B) shows a graph of the tracking offset compensation voltage Vo corresponding to the digital tracking offset data signal Dtos. The tracking offset compensation voltage Vo agrees with the amount that the tracking error signal Vte is offset from the the zero level axis.

The tracking offset compensation data signal Do corresponding to the tracking offset compensation voltage Vo is digitally subtracted from the digital tracking error data signal Dte in the digital subtractor 32. Thus, the corrected tracking error signal Vte-c corresponding to the digital corrected tracking error signal Dte-c output from the digital subtractor 32 has a waveform as shown in FIGURE 4(C). The corrected tracking error signal Vte-c as shown in FIGURE 3(C) is actually used for the tracking control servo. Thus, the servo convergence point S2 at that time agrees with the ideal servo convergence point Si on the zero level axis.

In this embodiment, the tracking offset voltage Vtos is automatically and accurately updated every time that the optical pickup 10 is place in a suspended condition. Such periods occur very often. Thus, if the tracking offset voltage Vtos has reoccurred, the tracking offset voltage Vtos is substantially removed before the actual tracking operation of the optical pickup 10.

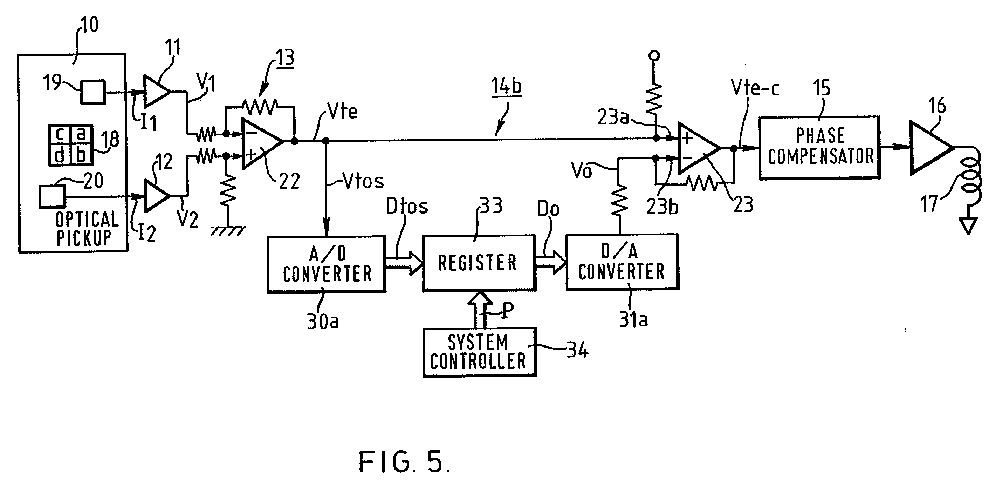

Referring now to FIGURE 5, a second embodiment of the pickup control circuit of the optical disc reproducing apparatus according to the present invention will be described. The second embodiment of the pickup control circuit is also applied for controlling the tracking operation of the optical pickup.

In FIGURE 5, the tracking control circuit is provided with an optical pickup 10, a pair of current/voltage converters 11 and 12, a tracking error signal generator 13, an offset compensation circuit 14b, a phase compensator 15, a power amplifier 16, a tracking actuator 17 and a focusing actuator (not shown). The optical pickup 10, the current/voltage converters 11 and 12, the tracking error signal generator 13, the phase compensator 15, the power amplifier 16 and the tracking actuator 17 correspond to those of the conventional tracking control circuit of FIGURE 1. The offset compensation circuit 14b operates similar to the tracking offset compensation circuit 14a of the first embodiment, but the offset compensation circuit 14b compensates for a tracking error signal using an analog technique. Therefore, the compensation circuit 14b of the second embodiment will be described in detail hereafter. But the other circuits of the second embodiment will be referred to as occasion demands.

The offset compensation circuit 14b includes a subtractor 23, an A/D converter 30a, a register 33, system controller 34 and a D/A converter 31a. The subtractor 23 corresponds to the second subtractor 23 of FIGURE 1. The A/D converter 30a, the register 33, the system controller 34 and the D/A converter 31a correspond to those of FIGURE 3.

A first input terminal 23a of the subtractor 23 is connected to the output terminal of the tracking error signal generator 13. A second input terminal 23b of the subtractor 23 is connected to the output terminal of the D/A converter 31a. The input terminal of the A/D converter 30a is connected to the output terminal of the tracking error signal generator 13. The input terminal of the register 33 is connected to the output terminal of the A/D converter 30a. The register 33 has a control terminal connected to the system controller 34. The system controller 34 is provided for controlling many operations of the optical disc reproducing apparatus, similar to the first embodiment.

In the second embodiment, the system controller 34 supplies the register 33 with a latch pulse P at a prescribed time. The latch pulse P is output from the system controller 34 at a time when the optical pickup 10 is placed in a suspended condition, similar to the first embodiment. The register 33 latches a digital tracking error data signal Dte output from the A/D converter 30a in response to the latch pulse P. The digital tracking error data signal Dte is obtained by converting a tracking error signal Vte output from the tracking error signal generator 13. Thus, the register 33 latches a value of the digital tracking error data signal Dte at the time when the latch pulse P is applied to the register 33.

The data latched in the register 33 is used as a digital offset compensation data signal Do, as described below. The digital offset compensation data signal Do latched in the register 33 is applied to the D/A converter 31a. The D/A converter 31a converts the digital offset compensation data signal Do to an analog signal. The analog offset compensation signal Vo output from the D/A converter 31a is applied to the second input terminal of the subtractor 23. Thus, the subtractor 23 subtracts the analog offset compensation signal Vo from the tracking error signal Vte which is applied to the first input terminal 23a of the subtractor 23 from the tracking error signal generator 13.

Thus, a corrected tracking error signal Vte-c is output from the offset compensation circuit 14b. The corrected tracking error signal Vte-c corresponds to the corrected tracking error signal Vte-c output from the D/A converter 31a of FIGURE 3.

In the second embodiment, the register 33 is provided for digitally storing the tracking error signal Vte obtained at the prescribed period that the optical pickup 10 is placed in a suspended condition. The A/D converter 30a and the D/A converter 31a are provided for connecting the register 33, which is a digital circuit device, between the tracking error signal generator 13 and the subtractor 23, which are analog circuit devices. A digital device such as register 33 is suitable for accurately storing signals or data like the offset compensation data signal Do. However, an analog voltage storing device such as a capacitor can be used.

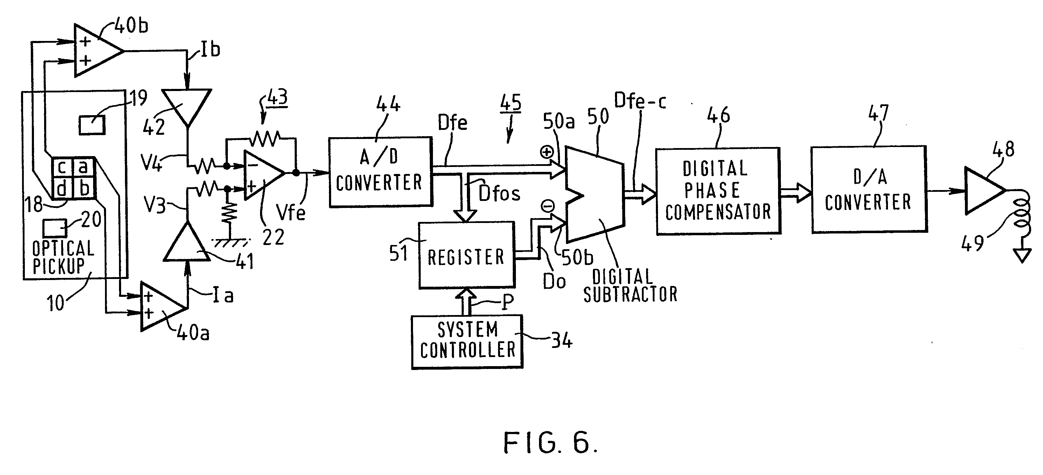

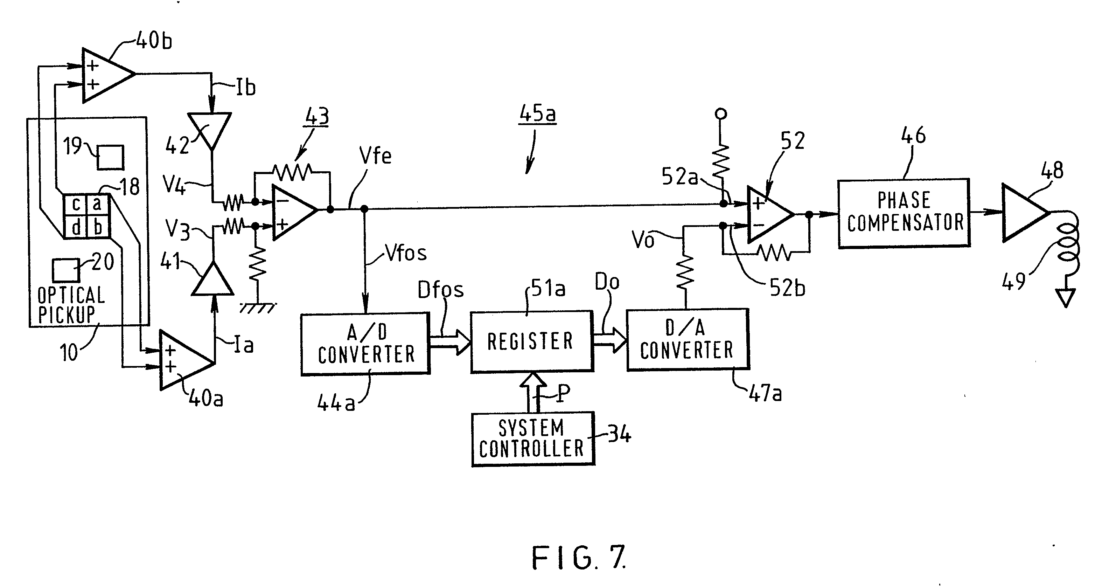

Referring now to FIGURES 6 and 7, third and fourth embodiments of the pickup control circuit of the optical disc reproducing apparatus according to the present invention will be described in detail. The third and fourth embodiments of the pickup control circuit are applied for controlling the focusing operation of the optical pickup. That is, the pickup control circuit of FIGURES 6 and 7 constitutes a focus control circuit for the optical pickup. On the other hand, the first and second embodiments of the pickup control circuit as described above are applied for compensating the tracking error signal.

In FIGURE 6, the third embodiment of the focus control circuit is provided with an optical pickup 10, a pair of adders 40a and 40b, a pair of current/voltage converters 41 and 42, a focus error signal generator 43, an A/D converter 44, a focus offset compensation circuit 45, a digital phase compensator 46, a D/A converter 47, a power amplifier 48 and a focusing actuator 49. The current/voltage converters 41 and 42, the phase compensator 46 and the power amplifier 48 correspond to those of FIGURE 3, i.e., the first embodiment applied for the tracking control circuit.

The optical pickup 10 has a construction the same as that of FIGURE 3. That is, the optical pickup 10 includes a main-beam detector 18, a pair of sub-beam detectors 19 and 20, a light source (not shown), a beam splitter (not shown), an objective lens (not shown), the focusing actuator 49 and a tracking actuator (not shown). The main-beam detector 18 has a square plane comprised of four photocells 18a, 18b, 18c and 18d. In the square plane main-beam detector 18, first and fourth photocells 18a and 18d make a first diagonal pair. The second and third photocells 18b and 18c make a second diagonal pair. On the other hand, the first and second photocells 18a and 18b of the main-beam detector 18 and one of the sub-beam detectors, e.g., the sub-beam detector 19 are positioned in a first line along the direction of the information track. The third and fourth photocells 18c and 18d of the main-beam detector 18 and the other sub-beam detector 20 are positioned in a second line along the direction of the information track. The sub-beam detectors 19 and 20 each are constituted by single photocell.

The light source generates three light beams, i.e., a main-beam and two sub-beams. The light beams are applied to the objective lens through the beam splitter. The objective lens converges the light beams on the optical disc so that the light beams are reflected by the optical disc. When the optical pickup 10 is properly controlled by a servo control controlled by the focus control circuit, the main-beam is exactly focused on the information track of the optical disc.

The main-beam detector 18 is connected to the focus error signal generator 13s through the the pair of adders 40a and 40b and the pair of current/voltage converters 41 and 42. That is, the first and second photocells 18a and 18b are connected to the first adder 40a. The third and fourth photocells 18c and 18d are connected to the second adder 40b.

In the focus control circuit, each of the photocells 18a, 18b, 18c and 18d detects a part of the main-beam. Thus, the photocells 18a, 18b, 18c and 18d generate third, fourth, fifth and sixth photo detection currents I3, I4, I5 and I6. The first and second photocells 18a and 18b are connected to the first adder 40a. The third and fourth photocells 18c and 18d are connected to the second adder 35b. Thus, the third and fourth photo detection currents I3 and I4 are added in the first adder 40a. The first adder 40a outputs a first sum detection current Ia. The third and fourth photocells 18c and 18d are connected to the second adder 40b. Thus, the fifth and sixth photo detection currents I5 and I6 are added in the second adder 40b. The second adder 40b outputs a second sum detection current Ib.

The invention thus includes the data pickup for reproducing data from a data storage medium. As embodied herein, the data pickup comprises the optical pickup 10.

The first and second sum detection currents Ia and Ib are applied to the current/voltage converters 41 and 42 so that the currents I5 and I6 are converted into third and fourth voltage signals V3 and V4, respectively. The third and fourth voltage signals V3 and V4 are applied to the focus error signal generator 43.

The focus error signal generator 43 comprises an analog subtractor 22, in similar to the tracking error signal generator 13 of FIGURE 3. Two input terminals of the analog subtractor 22 are connected to the current voltage converters 41 and 42 through resistors, respectively. The analog subtractor 22 subtracts the third and fourth voltage signals V3 and V4. Thus, the difference of the third and fourth voltage signals V3 and V4 is obtained by the analog subtractor 22. The difference is output from the focus error signal generator 43 as a focus error signal Vfe.

The embodiment thus includes first generating means for generating an error signal representing the degree to which the pickup is displaced from a proper position with respect to the information track. In this embodiment the first generating means is for generating a focus error signal representing the degree to which the pickup is displaced from a proper focussing position with respect to the information track. As embodied herein, the first generating means comprises the focus error signal generator 43.

The first and second sum detection currents Ia and Ib, i.e., the third and fourth voltage signals V3 and V4 vary in opposite direction to each other when optical pickup 10 moves in the direction vertical to the information track. Thus, the focus error signal Vfe varies in response to the displacement of the pickup 10 from the information track. The polarity of the focus error signal Vfe changes according to the error direction of the optical pickup 10 toward or departing from the information track.

The focus error signal Vfe output from the focus error signal generator 43 generally includes a DC focus offset voltage Vfos. The focus offset voltage Vfos is applied to the focus offset compensation circuit 45 as a part of the focus error signal Vfe. The focus offset compensation circuit 45 has a construction similar to the tracking error compensation circuit 14a of FIGURE 3, i.e., the first embodiment applied for the tracking control circuit. That is, the focus offset compensation circuit 45 comprises a digital subtractor 50 and a register 51. A first input terminal 50a of the digital subtractor 50 is connected to the output terminal of the A/D converter 44 for receiving the digital focus error data signal Dfe. A second input terminal 50b of the digital subtractor 50 is connected to the output terminal of the register 51.

The invention thus includes combining means for combining an offset compensation signal and the error signal to produce a corrected error signal. Preferrably, the invention thus includes combining means for combining a focussing offset compensation signal and the focus error signal to produce a corrected focus error signal. As embodied herein, the combining means comprises the digital subtractor 50.

The input terminal of the register 51 is connected to the output terminal of the A/D converter 44. The register 51 has a control terminal connected to a latch pulse source, e.g., a system controller 34. The system controller 34 is provided for controlling many operations of the optical disc reproducing apparatus and may be, for example, a microprocessor.

This embodiment thus includes second generating means for automatically generating the offset compensation signal from the error signal. Preferrably, the invention thus includes storing means for storing the focussing error signal as the focusing offset compensation signal in response to the system control signal. As embodied herein, the second generating means or the storing means comprises the register 51.

The focus control circuit, including the focus offset compensation circuit 45, operates to remove the focus offset voltage Vfos from the focus error signal Vfe by the same manner carried out in the first embodiment for removing the tracking offset voltage Vtos from the tracking error signal Vte.

The corrected digital focus error data signal Dfe-c output from the focus offset compensation circuit 14 is applied to D/A converter 47 through the digital phase compensator 46. The digital phase compensation circuit 46 compensates the digital corrected focus error signal Dfe-c so that the phase of the corrected focus error signal Vfe-c is corrected. The D/A converter 47 converts the digital corrected focus error signal Dfe-c to an analog signal. Thus, a corrected focus error signal Vfe-c corresponding to the digital corrected focus error signal Dfe-c is output from the D/A converter 47. The corrected focus error signal Vfe-c is applied to the power amplifier 48.

The power amplifier 48 drives the focusing actuator 49 according to corrected focus error signal Vfe-c. The focusing actuator 49 moves the optical pickup 10 or the objective lens in the optical pickup 10 in the direction vertical to the information track. The power amplifier 48, the focusing actuator 49, the optical pickup 10 and the focus error signal generator 43 constitute a focusing servo loop. In the focusing servo loop, the optical pickup 10 or the objective lens moves to reduce the corrected focus error signal Vfe-c to zero. As a result, the optical pickup 10 at the off-focus position of the information track moves to the on-focus position of the information track according to the servo control of the servo loop.

The invention thus includes supplying means for supplying the corrected error signal to the actuator means as the actuator means input signal. Preferrably, the invention thus includes supplying means for supplying the corrected focusing error signal to the actuator means as the actuator means input signal. As embodied herein, the supplying means comprises the power amplifier 48.

The fourth embodiment, as shown in FIGURE 7, is also applied for the focus control circuit. In FIGURE 7, the focus control circuit is provided with an optical pickup 10, a pair of adders 40a and 40b, a pair of current-voltage converters 41 and 42, a focus error signal generator 43, a focus offset compensation circuit 45a, a phase compensator 46, a power amplifier 48, a focusing actuator 49 and a tracking actuator (not shown). The optical pickup 10, the adders 40a and 40b, the current/voltage converters 41 and 42, the focus error signal generator 43, the phase compensator 46, the power amplifier 48 and the focusing actuator 49 correspond to those of FIGURE 6, i.e., the third embodiment. The focus offset compensation circuit 45a has a construction similar to the tracking error compensation circuit 14b of FIGURE 5, i.e., the second embodiment applied for the tracking control circuit. That is, the focus offset compensation circuit 45a includes a subtractor 52, an A/D converter 44a, a register 51a, a system controller 34 and a D/A converter 47a. The subtractor 52 corresponds to the second subtractor 23 of FIGURE 1. The A/D converter 44a, the register 51a, the system controller 34 and the D/A converter 46a correspond to those of FIGURE 3.

A first input terminal 52a of the subtractor 52 is connected to the output terminal of the focus error signal generator 43. A second input terminal 52b of the subtractor 52 is connected to the output terminal of the D/A converter 46a. The input terminal of the A/D converter 44a is connected to the output terminal of the focus error signal generator 43. The input terminal of the register 51a is connected to the output terminal of the A/D converter 44a. The register 51a has a control terminal connected to the system controller 34. The system controller 34 is provided for controlling many operations of the optical disc reproducing apparatus, similar to the first, second and third embodiments. Thus, the focus control circuit according to the fourth embodiment compensates a focus error signal using an analog technique.

As described above, the present invention can provide an extremely preferable pickup control circuit for an optical disc reproducing apparatus.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example for the purposes of a divisional application.

## Claims

1. Apparatus for controlling the operation of a data pickup (100) in an apparatus for reproducing data from a data storage medium, comprising actuator means (200), responsive to an input signal, for positioning the pickup with respect to an information track of the data storage medium, first generating means (300) for generating an error signal representing the degree to which the data pickup (100) is displaced from a proper position with respect to the information track, the error signal including a data signal and an offset signal, CHARACTERIZED IN THAT the apparatus further comprises:
combining means (400) for combining an offset compensation signal and the error signal to produce a corrected error signal;
supplying means (500) for supplying the corrected error signal to the actuator means (200) as the actuator means input signal; and
second generating means (600) for automatically generating the offset compensation signal from the error signal.

2. Apparatus as recited in claim 1, wherein the actuator means (200) comprises tracking actuator means (17) responsive to an input signal for laterally positioning the pickup with respect to an information track of the data storage medium.

3. Apparatus as recited in claim 1, wherein the actuator means (200) comprises focus actuator means (49) responsive to an input signal for vertically positioning the pickup with respect to an information track of the data storage medium.

4. Apparatus as recited in claim 1, wherein the second generating means (600) includes storing means (33, 51, 51a) for storing the error signal as the offset compensation signal when the data pickup (100) is operated to the suspended condition.

5. Apparatus as recited in claim 4, wherein the first generating means (300) comprises an analog-to-digital converter (30, 44) having an output, the storing means (33, 51, 51a) comprises a digital storage register (33, 51, 51a) having an input coupled to the output of the analog-to-digital converter (30, 44) and an output, and the combining means (400) comprises a digital subtractor (32, 50) having a first input coupled to the output of the analog-to-digital converter (30, 44) and a second input coupled to the output of the digital storage register (33, 51, 51a).

6. Apparatus as recited in claim 4, wherein the storing means (33, 51, 51a) comprises an analog-to-digital converter (30a, 44a), a digital storage register (33, 51a) having an input coupled to the analog-to-digital converter (30a, 44a), and a digital-to-analog converter (31a, 46a); and
wherein the combining means (14, 52) comprises an analog subtractor (14, 52) having a first input coupled to the first generating means (300, 13, 43) and a second input coupled to the analog-to-digital converter (30a, 44a).

7. Apparatus for controlling the operation of an optical pickup (10) in an optical disc reproducing apparatus having a system controller (34) for generating a system control signal, the optical pickup (10) being operable between an active condition and a suspended condition, comprising:
actuator means (200), responsive to an input signal, for positioning the optical pickup (10) on an information track of the data storage medium;
first generating means (13) for generating a tracking error signal representing the degree to which the optical pickup (10) is displaced laterally from a proper position with respect to the information track, the tracking error signal including a tracking data signal and a tracking offset signal, the tracking data signal being equal to the tracking offset signal when the optical pickup (10) is in the suspended condition;
combining means (14a) for combining a tracking offset compensation signal and the tracking error signal to produce a corrected tracking error signal;
supplying means (16) for supplying the corrected tracking error signal to the actuator means (17) as the actuator means input signal; and
storing means (33) for storing the tracking error signal as the tracking offset compensation signal in response to the system control signal.

8. Apparatus as recited in claim 7, wherein the storing means (33) stores the tracking error signal as the tracking offset compensation signal when the optical pickup is in the suspended condition.

9. Apparatus as recited in claim 8, wherein the first generating means (13) comprises an analog-to-digital converter (30) having an output, the storing means (33) comprises a digital storage register (33) having an input coupled to the output of the analog-to-digital converter (30) and an output, and the combining means (32) comprises a digital subtractor (32) having a first input coupled to the output of the analog-to-digital converter (30) and a second input coupled to the output of the digital storage register (33).

10. Apparatus as recited in claim 8, wherein the storing means (33) comprises an analog-to-digital converter (30a), a digital storage register (33) having an input coupled to the analog-to-digital converter (30a), and a digital-to-analog converter (31a); and
wherein the combining means (14) comprises an analog subtractor (23) having a first input coupled to the first generating means (13) and a second input coupled to the digital-to-analog converter (31a).

11. Apparatus for controlling the operation of an optical pickup (10) in an optical disc reproducing apparatus having a system controller (34) for generating a system control signal, the optical pickup (10) being operable between an active condition and a suspended condition, comprising:
actuator means (49), responsive to an input signal, for positioning the optical pickup (10) on an information track of the data storage medium;
first generating means (43) for generating a focus error signal representing the degree to which the optical pickup (10) is displaced vertically from a proper position with respect to the information track, the focus error signal including a focus data signal and a focus offset signal, the focus data signal being equal to the focus offset signal when the optical pickup (10) is in the suspended condition;
combining means (50, 52) for combining a focus offset compensation signal and the focus error signal to produce a corrected focus error signal;
supplying means (48) for supplying the corrected focus error signal to the actuator means (49) as the actuator means input signal; and
storing means (51, 51a) for storing the focus error signal as the focus offset compensation signal in response to the system control signal.

12. Apparatus as recited in claim 11, wherein the storing means (51, 51a) stores the focus error signal as the focus offset compensation signal when the optical pickup (10) is operated to the suspended condition.

13. Apparatus as recited in claim 12, wherein the first generating means (45) comprises an analog-to-digital converter (44) having an output, the storing means comprises a digital storage register (51) having an input coupled to the output of the analog-to-digital converter (44) and an output, and the combining means comprises a digital subtractor (50) having a first input coupled to the output of the analog-to-digital converter (44) and a second input coupled to the output of the digital storage register (51).

14. Apparatus as recited in claim 12, wherein the storing means comprises an analog-to-digital converter (44a), a digital storage register (51a) having an input coupled to the analog-to-digital converter (44a), and a digital-to-analog converter (46a); and

wherein the combining means comprises an analog subtractor (52) having a first input coupled to the first generating means (43) and a second input coupled to the analog-to-digital converter (46a).

FIG. 1.

EP 0 361 920 A2

FIG. 2.

EP 0 361 920 A2

FIG. 3.

EP 0 361 920 A2

FIG. 4(A)

FIG. 4(B)

FIG. 4(C)

FIG. 5.

EP 0 361 920 A2

FIG. 6.

EP 0 361 920 A2

FIG. 7.